# EUROPÄISCHE PATENTSCHRIFT

(11) **EP 2 516 222 B1**
(45) Veröffentlichungstag und Bekanntmachung des Hinweises auf die Patenterteilung: **14.09.2016**
(21) Anmeldenummer: 10781628.2
(22) Anmeldetag: 28.10.2010
(51) Int. Cl.: B60T 7/02, B60T 8/00, B60T 11/10, B60T 11/16

(54) **HAUPTBREMSZYLINDER FÜR EINE HYDRAULISCHE FAHRZEUGBREMSANLAGE UND VERFAHREN ZU IHREM BETRIEB**
MAIN BRAKE CYLINDER FOR A HYDRAULIC VEHICLE BRAKE SYSTEM AND METHOD FOR OPERATING SAME
MAÎTRE-CYLINDRE DE FREIN POUR UN SYSTÈME DE FREINAGE HYDRAULIQUE DE VÉHICULE ET PROCÉDÉ PERMETTANT DE FAIRE FONCTIONNER LEDIT MAÎTRE-CYLINDRE DE FREIN

(30) Priorität: 22.12.2009 DE 102009055117
(43) Veröffentlichungstag der Anmeldung: 31.10.2012
(73) Patentinhaber: Robert Bosch GmbH, 70442 Stuttgart (DE)
(72) Erfinder: KUNZ, Michael, 71711 Steinheim an der Murr (DE)
(86) Internationale Anmeldenummer: PCT/EP2010/066344
(87) Internationale Veröffentlichungsnummer: WO 2011/085836

(56) Entgegenhaltungen:
- EP-A2- 1 103 436
- DE-A1- 10 119 128
- DE-A1- 10 223 799
- DE-A1- 10 233 838
- DE-A1- 10 324 246
- DE-A1- 10 342 937
- DE-A1- 19 500 544
- DE-A1- 19 905 660
- DE-A1-102005 039 314
- DE-A1-102008 001 013

## Beschreibung

Die Erfindung betrifft einen Hauptbremszylinder für eine hydraulische Fahrzeugbremsanlage mit den Merkmalen des Oberbegriffs des Anspruchs 1 sowie ein Verfahren zu ihrem Betrieb mit den Merkmalen des Oberbegriffs des Anspruchs 5.

### Stand der Technik

Es sind Hybridfahrzeuge bekannt, die einen Verbrennungs- und einen (oder mehrere) Elektromotor zu ihrem Antrieb aufweisen. Zum Verzögern solcher Kraftfahrzeuge kann der Elektromotor als Generator betrieben und der erzeugte Strom in einem Akkumulator gespeichert werden. Das Verzögern des Kraftfahrzeugs mit dem als Generator betriebenen Elektromotor wird als rekuperatives Bremsen bezeichnet. Der Elektromotor kann allgemein als elektrische Maschine aufgefasst werden, es kann sich beispielsweise auch um einen Generator handeln.

Um eine bestimmte Verzögerung zu erzielen muss eine Bremswirkung der hydraulischen Fahrzeugbremsanlage um die Verzögerungswirkung der als Generator betriebenen elektrischen Maschine verringert werden. Bei einfachen Systemen muss ein Fahrzeugführer die Bremswirkung der als Generator betriebenen elektrischen Maschine ausgleichen oder die Verzögerung des Kraftfahrzeugs erhöht sich über die Bremswirkung, der Fahrzeugbremsanlage um die Verzögerungswirkung der als Generator betriebenen elektrischen Maschine.

Bei aufwendigeren Systemen wird versucht, die Verzögerungswirkung der als Generator betriebenen elektrischen Antriebsmaschine automatisch durch Verringerung der Bremswirkung der hydraulischen Fahrzeugsbremsanlage auszugleichen, wobei der Ausgleich mehr oder weniger gut erfolgt. Der Ausgleich der Verzögerungswirkung der als Generator betriebenen elektrischen Maschine durch Verringerung der Bremswirkung der Fahrzeugbremsanlage wird auch als Verblenden bezeichnet. Bestrebungen gehen dahin, dass nicht nur die Verzögerungswirkung der als Generator betriebenen elektrischen Maschine mehr oder weniger gut ausgeglichen wird, sondern dass ein Pedalgefühl an einem Bremspedal (oder einem Handbremshebel) möglichst unverändert bleibt, d. h. dass ein Fahrzeugführer möglichst nicht oder möglichst wenig davon spürt, dass das Kraftfahrzeug zu einem mehr oder weniger großen Teil von der elektrischen Maschine verzögert wird, die als Generator betrieben wird, und die Bremswirkung der Fahrzeugbremsanlage entsprechend verringert ist.

Als Schwierigkeit kommt beim Verblenden dazu, dass die Verzögerungswirkung der als Generator betriebenen elektrischen Maschine von verschiedenen Umständen abhängig ist und sich während des Bremsens ändert. Ein solcher Umstand ist, dass die Bremswirkung der als Generator betriebenen elektrischen Maschine bei abnehmender Fahrgeschwindigkeit abnimmt bis auf Null im Stillstand. Auch ein Ladezustand des Akkumulators ist ein solcher Umstand: Ist der Akkumulator voll geladen und kann deswegen keinen elektrischen Strom aufnehmen, ist ein Generatorbetrieb der elektrischen Maschine nicht möglich und das Kraftfahrzeug muss in herkömmlicher Weise ausschließlich mit der hydraulischen Fahrzeugbremsanlage gebremst werden. Schaltvorgänge bringen jedenfalls dann sprungartige Unstetigkeiten in die Verzögerungswirkung der als Generator betriebenen elektrischen Maschine, wenn diese beim Auskuppeln von Fahrzeugrädern entkoppelt wird.

Die Offenlegungsschrift DE 10 2008 003 664 A1 offenbart eine hydraulische Fahrzeugbremsanlage mit einer Schlupfregelung für ein Hybridfahrzeug. Bei einer Betriebsbremsung wird ein Bremskreis durch Schließen eines Trennventils hydraulisch von einem Hauptbremszylinder getrennt und ein Radbremsdruck mit einer Hydropumpe erzeugt und, wie bei einer Schlupfregelung, mit Bremsdruckaufbau- und Bremsdruckabsenkventilen geregelt. Dabei soll unter Regelung im Sinne der Erfindung auch eine Steuerung verstanden werden. Der Radbremsdruck wird so stark verringert wie es der Verzögerung einer als Generator betriebenen elektrischen Maschine des Kraftfahrzeugs entspricht, wobei eine Gesamtverzögerung des Kraftfahrzeugs mit der als Generator betriebenen elektrischen Maschine und der hydraulischen Fahrzeugbremsanlage möglichst genau einer Verzögerung entsprechen soll, die bei Bremsung ausschließlich durch Betätigung der Fahrzeugbremsanlage mit einem Hauptbremszylinder und ohne die elektrische Maschine im Generatorbetrieb erzielt werden würde. Einen Sollwert für die Bremswirkung gibt ein Betätigungsweg und/oder eine Betätigungskraft des Hauptbremszylinders und/oder ein Hauptbremszylinderdruck vor. Ein Fahrzeugführer soll beim Bremsen möglichst nichts davon merken, dass ein Teil der Verzögerung durch die als Generator betriebene elektrische Maschine bewirkt wird. Eine sich ändernde Verzögerungswirkung der als Generator betriebenen elektrischen Maschine während einer Bremsung soll möglichst nicht spürbar sein. Ein zweiter Bremskreis wird bei der bekannten Fahrzeugbremsanlage in üblicher Weise mit dem Hauptbremszylinder betätigt, dort erfolgt kein Regelungseingriff beim Bremsen zum Ausgleich der Verzögerungswirkung der als Generator betriebenen elektrischen Maschine.

Eine ebensolche Fahrzeugbremsanlage für ein Hybridfahrzeug, deren Bremskraft in gleicher Weise geregelt wird, offenbart die Offenlegungsschrift DE 10 2005 039 314 A1. Auch dort wird die Bremskraft durch Reduktion eines Bremsdrucks reduziert, wenn bei einer Bremsbetätigung eine als Generator betriebene elektrische Maschine das Fahrzeug verzögert. Idealer Weise wird die Bremskraft der Fahrzeugbremsanlage so stark reduziert, dass die Verzögerungswirkung der als Generator betriebenen elektrischen Maschine ausgeglichen wird. Vorzugsweise wird die Bremskraft der Fahrzeugräder reduziert, auf die die elektrische Maschine wirkt.

Aus der Offenlegungsschrift DE 102 33 838 A1 ist ein Hauptbremszylinder für eine elektrohydraulische-, also eine Fremdenergie-Fahrzeugbremsanlage bekannt. Der Hauptbremszylinder weist für einen Bremskreis zwei Kolben auf, deren einer als sog. Stangenkolben mechanisch mit einem Bremspedal verbunden ist. Eine Mitnehmereinrichtung nimmt einen zweiten Kolben, der denselben Bremskreis beaufschlagt, nach einem vorgegebenen Kolbenweg des ersten Kolbens mit. Bis sich der zweite Kolben mit dem ersten Kolben mitbewegt ist eine wirksame Kolbenfläche des ersten Kolbens kleiner als die wirksame Kolbenfläche beider Kolben zusammen wenn nach Zurücklegen des vorgegebenen Kolbenwegs sich beide Kolben bewegen. Die kleinere wirksame Kolbenfläche bewirkt eine kleinere Betätigungskraft bei einem gegebenen Hauptbremszylinderdruck. Dadurch wird ein Pedalkraftanstieg verringert, wenn der Hauptbremszylinder durch Schließen eines Trennventils zu einer Fremdenergiebremsung hydraulisch von der Fahrzeugbremsanlage getrennt wird. Die Fahrzeugbremsanlage wird dabei nicht mit dem Hauptbremszylinder gebremst, der Hauptbremszylinder dient als Sollwertgeber für eine einzustellende Bremskraft. Ein mit dem Hauptbremszylinder kommunzierender Hydrospeicher nimmt Bremsflüssigkeit auf, die bei Betätigung aus dem Hauptbremszylinder verdrängt wird.

Der Verschiebeweg des ersten Kolbens bis zur Mitnahme des zweiten Kolbens ist so bemessen, dass normalerweise bei einer Betriebsbremsung nur der erste Kolben verschoben wird. Der zweite Kolben, der die wirksame Kolbenfläche vergrößert, ist für eine Hilfsbremsung bei einer Störung der Fremdenergie-Fahrzeugbremsanlage vorgesehen. Der zweite Kolben vergrößert ein je Kolbenweg aus dem Hauptbremszylinder verdrängtes Bremsflüssigkeitsvolumen zur Betätigung der Fahrzeugbremsanlage mit dem Hauptbremszylinder. Der zweite Kolben ist dafür vorgesehen, dass bei einer Hilfsbremsung bei einer Störung der Fremdenergie-Fahrzeugbremsanlage ausreichend Bremsflüssigkeit zur Betätigung der Fahrzeugbremsanlage aus dem Hauptbremszylinder verdrängt wird und dass ein Betätigungsweg des Hauptbremszylinders sich nicht zu weit verlängert.

### Offenbarung der Erfindung

Der erfindungsgemäße Hauptbremszylinder mit den Merkmalen des Anspruchs 1 ist für eine hydraulische Fahrzeugbremsanlage eines Kraftfahrzeugs vorgesehen, das eine elektrische Maschine aufweist, die zum Verzögern des Kraftfahrzeugs als Generator betreibbar ist. Die elektrische Maschine ist insbesondere ein Elektromotor zum Antrieb des Kraftfahrzeugs, es können auch mehrere Elektromotoren beispielsweise für mehrere oder alle Fahrzeugräder zum Antrieb des Kraftfahrzeugs vorhanden sein. Das Kraftfahrzeug kann beispielsweise ein Hybridfahlzeug mit einem Verbrennungsmotor und einem (oder mehreren Elektromotoren) zu seinem Antrieb oder ein Elektrofahrzeug sein.

Der Hauptbremszylinder weist zwei Kolben für einen Bremskreis und eine Mitnehmereinrichtung auf, die nach Verschieben eines ersten der beiden Kolben um einen vorgegeben Kolbenweg den zweiten Kolben mit dem ersten Kolben mitbewegt. Solange sich nur der erste Kolben bewegt, ist die wirksame Kolbenfläche kleiner als wenn sich nach Zurücklegen des vorgegebenen Kolbenwegs beide Kolben gemeinsam bewegen. Der erste Kolben ist insbesondere ein Stangenkolben, der mechanisch mit einem (Fuß-)Bremspedal, einem (Hand-)Bremshebel oder einem sonstigen Betätigungsorgan verbunden ist ggf. unter Zwischenschaltung eines Bremskraftverstärkers. Der Stangenkolben wird auch als Primärkolben bezeichnet. Sofern die Fahrzeugbremsanlage mehr als einen Bremskreis aufweist, weist der Hauptbremszylinder für den oder die weiteren Bremskreise eigene Bremskolben, insbesondere einen oder mehrere sog. Schwimmkolben auf, der auch als Sekundärkolben bezeichnet wird. Die beiden einem Bremskreis zugeordneten Kolben des Hauptbremszylinders können in einem gemeinsamen Zylinder oder auch in zwei beispielsweise parallel angeordneten Zylindern angeordnet sein. Es können beispielsweise beide Kolben ineinanderliegend im Hauptbremszylinder angeordnet sein (Anspruch 2). Aufgrund der kleineren wirksamen Kolbenfläche wenn nur der erste Kolben bei einer Betätigung des Hauptbremszylinders verschoben wird ist die Betätigungskraft niedriger. Wird der Hauptbremszylinder bei einer Bremsung hydraulisch von der Fahrzeugbremsanlage oder von einem Bremskreis der Fahrzeugbremsanlage getrennt, lässt sich durch die kleinere wirksame Kolbenfläche ein zumindest ähnliches Pedalgefühl wie bei einem herkömmlichen Hauptbremszylinder, also eine zumindest näherungsweise übliche Pedalkennlinie erzielen, wobei die Pedalkennlinie eine Abhängigkeit zwischen der Betätigungskraft und einem Betätigungsweg des Hauptbremszylinders, also dem Verschiebeweg des Kolbens, wiedergibt. Wird der vorgegebene Kolbenweg überschritten und werden beide Kolben gemeinsam bewegt, ist ein aus dem Hauptbremszylinder verdrängtes Bremsflüssigkeitsvolumen in Abhängigkeit vom Kolbenweg größer damit ausreichend Bremsflüssigkeit zu einer Betätigung der Fahrzeugsbremsanlage mit dem Hauptbremszylinder aus diesem verdrängt und der dazu notwendige Kolbenweg nicht zu lang wird.

Des weiteren weist der erfindungsgemäße Hauptbremszylinder einen Hydrospeicher auf, der mit dem Hauptbremszylinder kommuniziert und eine Vorspannung aufweist. Die Vorspannung kann durch Gasdruck oder eine mechanische Feder bewirkt sein, die Aufzählung ist nicht abschließend. Die Vorspannung des Hydrospeichers ist so groß, dass er erst Bremsflüssigkeit aus dem Hauptbremszylinder aufnimmt, wenn ein Hauptbremszylinderdruck größer als ein maximaler Auslegedruck der Fahrzeugbremsanlage ist. Der maximale Auslegedruck der Fahrzeugbremsanlage ist der Druck, der bei einer angenommenen maximalen auf den Hauptbremszylinder ausgeübten Muskelkraft entsteht. Das bedeutet, dass der Hydrospeicher normalerweise keine Bremsflüssigkeit aufnimmt, weder bei einer Betriebsbremsung, bei der der Hauptbremszylinder hydraulisch von der Fahrzeugbremsanlage oder einem Bremskreis der Fahrzeugbremsanlage getrennt sein kann, noch bei einer Hilfsbremsung bei einer Störung der Fahrzeugbremsanlage. Der Hydrospeicher begrenzt den Hauptbremszylinderdruck bzw. verringert einen maximalen Hauptbremszylinderdruck. Er ist insbesondere dafür vorgesehen, eine Beschädigung zu vermeiden, wenn der Hauptbremszylinder von der Fahrzeugbremsanlage getrennt ist, d. h. keine Bremsflüssigkeit aus ihm in die Fahrzeugbremsanlage verdrängt werden kann und nur der erste Kolben verschoben wird. Wegen der kleineren wirksamen Kolbenfläche des ersten Kolbens ist der Hauptbremszylinderdruck bei einer bestimmten Betätigungskraft größer, der maximale Auslegedruck der Fahrzeugbremsanlage könnte deswegen überschritten werden. Um das zu vermeiden oder die Überschreitung des maximalen Auslegedrucks zu begrenzen bzw. zu verringern, ist der Hydrospeicher mit der Vorspannung vorgesehen.

Die Erfindung ist für Kraftfahrzeuge vorgesehen, die eine elektrische Maschine aufweisen, die bei einer Bremsbetätigung als Generator betrieben wird, um das Fahrzeug zu verzögern und dabei kinetische Energie in elektrische Energie zu wandeln, die in einem Akkumulator gespeichert und später zum Beschleunigen bzw. Antrieb des Kraftfahrzeugs verwendet wird. Das Wandeln kinetischer in elektrische Energie beim Bremsen eines Fahrzeugs wird auch als Rekuperation bezeichet. Die elektrische Maschine ist normalerweise ein Elektro-Antriebsmotor (oder mehrere Elektro-Antriebsmotoren) des Kraftfahrzeugs, das zusätzlich einen Verbrennungsmotor zu seinem Antrieb aufweisen kann und dann auch als Hybridfahrzeug bezeichnet wird oder das als Elektrofahrzeug ausschließlich einen oder mehrere Elektro-Antriebsmotoren aufweist.

Bei einem solchen Fahrzeug ist die Erfindung für eine hydraulische Fahrzeugbremsanlage vorgesehen, die Fahrzeugräder einer Achse (Vorder- oder Hinterachse) "by-wire", d. h. per Fremdkraft bremst. Ein hydraulischer Bremsdruck zur Fremdkraftbremsung kann mit einer Hydropumpe erzeugt werden, die bei schlupfgeregelten Fahrzeuganlagenbremsen ohnehin vorhanden ist. Ein Radbremsdruck wird vorzugsweise mit Magnetventilen gesteuert oder geregelt. Es kann auch der Pumpendruck durch die Pumpendrehzahl oder mit einem Magnetventil geregelt werden. Der fremdkraftgebremste Bremskreis kann der oder ein Bremskreis sein, dessen Fahrzeugräder mit dem Elektro-Antriebsmotor angetrieben und gebremst werden oder es kann der bzw. ein anderer Bremskreis sein. Der andere bzw. ein anderer Bremskreis wird unverändert per Muskelkraft, ggf. mit Unterstützung durch einen Bremskraftverstärker, mit dem Hauptbremszylinder betätigt. Allerdings ist die Erfindung nicht auf solche Fahrzeugbremsanlagen beschränkt.

Bei solchen Fahrzeugbremsanlagen treten zwei Probleme mit einander entgegengesetzten Wirkungen auf: Weil zur Bremsung ein Bremskreis hydraulisch vom Hauptbremszylinder getrennt wird, verkürzt sich ein Betätigungsweg, also ein Pedalweg eines Bremspedals zum Erreichen einer bestimmten Bremswirkung. Ausserdem verringert sich eine "Elastizität" der Fahrzeugbremsanlage, das Bremspedal fühlt sich bei einer Bremsbetätigung spürbar härter an, wenn der Hauptbremszylinder von einem Bremskreis getrennt ist und nur auf den anderen bzw. einen anderen Bremskreis wirkt. Diesem Problem begegnet die Erfindung mit dem einem Kolben im Hauptbremszylinder, dessen Durchmesser bzw. Kolbenfläche verkleinert, d. h. kleiner als ein Innendurchmesser des Hauptbremszylinders, ist. Bei einem bestimmten Pedalweg verdrängt dieser Kolben weniger Bremsflüssigkeit aus dem Hauptbremszylinder, der Betätigungs- bzw. Pedalweg verlängert sich, vorzugsweise auf sein normales Maß. Auch die "Elastizität" bzw. "Pedalhärte" bei einer Bremsbetätigung kehrt zurück, weil die Betätigungskraft bei einem bestimmten Druck aufgrund der kleineren Kolbenfläche kleiner ist.

Mit der kleineren Kolbenfläche des Kolbens im Hauptbremszylinder tritt jedoch das zweite Problem auf, dass der Hauptbremszylinderdruck bei einer bestimmten Pedalkraft größer ist. Tritt ein Fahrzeugführer mit maximaler Muskelkraft auf das Bremspedal, kann der dadurch erzeugte hydraulische Druck die Fahrzeugbremsanlage beschädigen oder zerstören. Dem begnet die Erfindung mit dem Hydrospeicher, der eine Vorspannung aufweist und der aus dem Hauptbremszylinder verdrängte Bremsflüssigkeit aufnimmt, wenn der Druck größer als der Druck ist, für den die Fahrzeugbremsanlage ausgelegt ist. Der hydraulische Druck in der Fahrzeugbremsanlage wird dadurch so beschränkt, dass die Fahrzeugbremsanlage nicht beschädigt wird. Sie muss deswegen nicht für einen höheren Druck ausgelegt werden. Beim normalen Bremsen tritt der Hydrospeicher aufgrund seiner Vorspannung nicht in Aktion, d. h. nimmt keine Bremsflüssigkeit auf und verlängert deswegen nicht den Betätigungs- bzw. Pedalweg des Hauptbremszylinders.

Der zweite Kolben des erfindungsgemäßen Hauptbremszylinders, der auf denselben Bremskreis wie der erste Kolben wirkt und der vom ersten Kolben mitgenommen wird, wenn der erste Kolben den vorgegebenen Kolbenweg zurückgelegt hat, vergrößert das bei einem bestimmten Kolbenweg aus dem Hauptbremszylinder verdrängte Bremsflüssigkeitsvolumen auf das übliche Maß, damit für eine Hilfsbremsung beispielsweise bei einer Störung der Hydropumpe ausreichend Bremsflüssigkeit zur Bremsbetätigung verfügbar ist.

Die Unteransprüche haben vorteilhafte Ausgestaltungen und Weiterbildungen der im Anspruch 1 angegebenen Erfindung zum Gegenstand.

Anspruch 3 sieht vor, dass der erste Kolben den Hauptbremszylinder nach einem kurzen Verschiebeweg von einem Bremsflüssigkeitsvorratsbehälter trennt. Das entspricht dem Stangenkolben eines herkömmlichen Hauptbremszylinders.

Der erfindungsgemäße Hauptbremszylinder kann als Einfach-Hauptbremszylinder, d. h. für einen Bremskreis ausgebildet sein. Anspruch 4 sieht einen Tandem- oder Mehrkreis-Hauptbremszylinder für eine Zweikreis-Fahrzeugbremsanlage vor. Ein Hauptbremszylinder für mehr als zwei Bremskreise ist nicht ausgeschlossen.

Der Verfahrensanspruch 5 sieht vor, zu einer Betriebsbremsung bei Betätigung des erfindungsgemäßen Hauptbremszylinders eine elektrische Maschine eines Kraftfahrzeugs, das mit der Fahrzeugbremsanlage ausgerüstet ist, als Generator zu betreiben und das Kraftfahrzeug dadurch zu verzögern. Außerdem wird der Hauptbremszylinder durch Schließen eines Trennventils von der Fahrzeugbremsanlage oder von einem (oder mehreren) Bremskreis der Fahrzeugbremsanlage getrennt. In diesem Bremskreis wird ein Radbremsdruck mit einer Hydropumpe erzeugt und so geregelt, dass eine Gesamtverzögerungswirkung der elektrischen Maschine, die als Generator betrieben wird, sowie des vom Hauptbremszylinder getrennten Bremskreises und ggf. eines oder mehrerer weiterer Bremskreise zumindest ungefähr so groß ist wie sie bei einer Bremsung mit gleicher Betätigungskraft und/oder gleichem Betätigungsweg wäre, wenn das Kraftfahrzeug ausschließlich durch Betätigung der Fahrzeugbremsanlage mit dem Hauptbremszylinder verzögert werden würde. Änderungen der Verzögerungswirkung der elektrischen Maschine, die als Generator betrieben wird, werden ausgeregelt, so dass es für einen Fahrzeugführer möglichst unmerklich ist.

Die Regelung des Radbremsdrucks kann radindividuell mit Bremsdruckaufbauventilen und Bremsdruckabsenkventilen erfolgen, die Radbremsen zugeordnet sind, wie sie von Schlupfregelungen bekannt sind. Eine Regelung des Radbremsdrucks kann auch durch eine Drehzahlregelung eines Antriebs der Hydropumpe und/oder ein oder mehrere Regelventile, die der Hydropumpe vor- oder nachgeschaltet sind oder mit denen die Fahrzeugsbremsanlage bzw. der Bremskreis mit dem drucklosen Bremsflüssigkeitsvorratsbehälter des Hauptbremszylinders verbindbar ist, erfolgen. Es kann auch der Radbremsdruck mehrerer Radbremsen, beispielsweise der einer Fahrzeugachse zugeordneten Radbremsen, oder aller Radbremsen gemeinsam geregelt werden. Unter regeln ist hier wie bereits gesagt auch ein Steuern zu verstehen.

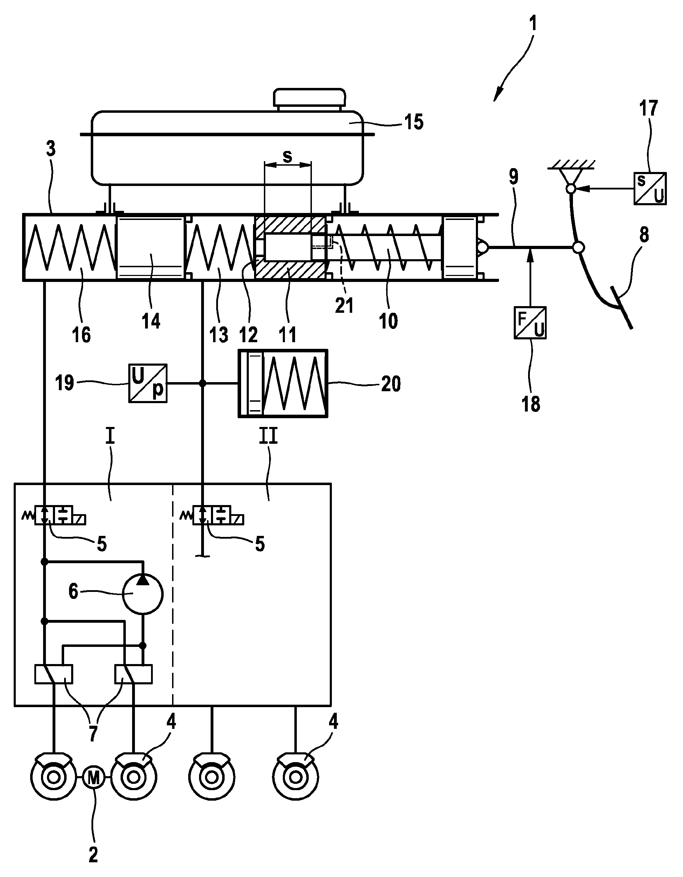

### Kurze Beschreibung der Zeichnung

Die Erfindung wird nachfolgend anhand einer in der Zeichnung dargestellten Ausführungsform näher erläutert. Die einzige Figur zeigt eine Schemadarstellung einer hydraulischen Fahrzeugsbremsanlage mit einem Hauptbremszylinder gemäß der Erfindung. Die Zeichnung ist als vereinfachte Darstellung zum Verständnis und zur Erläuterung der Erfindung zu verstehen.

### Ausführungsform der Erfindung

Die in der Zeichnung dargestellte, erfindungsgemäße hydraulische Fahrzeugbremsanlage 1 ist für ein nicht dargestelltes Hybridfahrzeug, also ein Kraftfahrzeug mit einem Verbrennungsmotor und einem Elektromotor 2 als Antriebsmotoren vorgesehen. Der Elektromotor 2 wirkt auf zwei Räder einer Fahrzeugachse. Es können auch mehrere Elektromotoren beispielsweise für einzelne oder alle Fahrzeugräder vorgesehen sein (nicht dargestellt). Das Fahrzeug kann auch ein reines Elektrofahrzeug mit Antrieb durch den Elektromotor 2 ohne Verbrennungsmotor sein. Beim Bremsen wird der Elektromotor 2, der allgemein auch als elektrische Maschine 2 aufgefasst werden und nachfolgend als solche bezeichnet wird, als Generator betrieben, um Strom zu erzeugen, der in einem nicht dargestellten Akkumulator gespeichert und für den Antrieb des Kraftfahrzeugs mit der elektrischen Maschine 2 verfügbar ist.

Die Fahrzeugbremsanlage 1 ist eine Zweikreis-Fahrzeugbremsanlage 1 mit zwei Bremskreisen I, II, die an einen Tandem-Hauptbremszylinder 3 angeschlossen sind. An beide Bremskreise I, II sind hydraulische Radbremsen 4 angeschlossen, wobei die Radbremsen 4 der Fahrzeugräder, die mit der elektrischen Maschine 2 antreibbar sind, an einen Bremskreis I und die anderen Radbremsen 4 an den anderen Bremskreis II angeschlossen sind.

Die Fahrzeugbremsanlage 1 weist eine Schlupfregelung auf, die hier stark vereinfacht und nur im Bremskreis I dargestellt ist. Die Schlupfregelung weist ein Trennventil 5 auf, über das die Bremskreise I, II an den Hauptbremszylinder 3 angeschlossen und durch Schließen des Trennventils 5 hydraulisch vom Hauptbremszylinder 3 trennbar sind. Des Weiteren weist die Fahrzeugbremsanlage 1 in jedem Bremskreis I, II eine Hydropumpe 6, mit der ein Bremsdruck erzeugbar ist, und Radbremsdruckmodulationsventilanordnungen 7 für jede Radbremse 4 auf, mit denen Radbremsdrücke in Bremszylindern der Radbremsen 4 und damit Bremskräfte der Radbremsen 4 radindividuell regelbar sind. Solche Radbremsdruckmodulationsventilanordnungen 7 weisen üblicherweise ein Bremsdruckaufbauventil und ein Bremsdrucksenkventil auf. Schlupfregelungen mit einer Hydropumpe 6 und Radbremsdruckmodulationsventilanordnungen 7 sind bekannt und sollen hier nicht näher erläutert werden. Wesentlich ist, dass ein Bremsdruck in den Bremskreisen I, II unabhängig vom Hauptbremszylinder 3 mit den Hydropumpen 6 erzeugbar und die Radbremsdrücke regelbar sind, wobei eine radindividuelle Regelung der Radbremsdrücke für eine Schlupfregelung notwendig ist, nicht jedoch für die Erfindung. Für die Erfindung genügt eine gemeinsame Regelung der Radbremsdrücke aller Radbremsen 4 eines Bremskreises I, II, u. U. sogar eine gemeinsame Regelung des Radbremsdrucks aller Radbremsen 4 der Fahrzeugbremsanlage 1. Außer mit den Radbremsdruckmodulationsventilnordungen 7 ist eine Regelung des Radbremsdrucks beispielsweise auch durch eine Drehzahlregelung eines Antriebs der Hydropumpe 6 oder durch ein nicht dargestelltes Druckregelventil beispielsweise auf einer Saug- oder einer Druckseite der Hydropumpe 6, mit dem die Bremsdrücke in den Bremskreisen I, II regelbar sind, möglich. Der nicht dargestellte Bremskreis II ist gleich aufgebaut wie der Bremskreis I und funktioniert in gleicher Weise.

Der erfindungsgemäße Hauptbremszylinder 3 ist muskelkraftbetätigbar, er weist ein Bremspedal 8 zu seiner Betätigung auf, das über eine Kolbenstange 9 mit einem Stangenkolben verbunden ist, der auch als Primärkolben bezeichnet werden kann und hier als erster Kolben 10 bezeichnet wird. Der Hauptbremszylinder 3 kann einen hier nicht dargestellten Bremskraftverstärker aufweisen. Der erste Kolben 10 weist einen kleineren Durchmesser auf als der Hauptbremszylinder 3. Er ist im Hauptbremszylinder 3 und in einem rohrförmigen zweiten Kolben 11 verschiebbar, dessen Innendurchmesser einem Durchmesser des ersten Kolbens 10 und dessen Außendurchmesser dem Durchmesser des Hauptbremszylinders 3 entspricht. Mit Durchmesser des Hauptbremszylinders 3 ist dessen Bohrungs- oder Innendurchmesser gemeint. Der erste Kolben 10 liegt also im zweiten, rohrförmigen Kolben 11 ein. Der zweite Kolben 11 weist einen nach innen stehenden Bund an seinem dem Pedal 8 fernen Ende auf, der auch als Anschlag für den ersten Kolben 10 oder als Mitnehmereinrichtung 12 für den zweiten Kolben 11 aufgefasst werden kann. Die Mitnehmereinrichtung 12 bewirkt, dass der erste Kolben 10 um einen vorgegebenen Kolbenweg s ohne den zweiten Kolben 11 im Hauptbremszylinder 3 verschiebbar ist und nach über Überwinden des vorgegebenen Kolbenwegs s den zweiten Kolben 12 mitnimmt. Sobald der erste Kolben 10 an dem nach innen stehenden Bund des ersten Kolbens 11 anliegt, verschieben sich die beiden Kolben 10, 11 gemeinsam im Hauptbremszylinder 3. Der nach innenstehende Bund des zweiten Kolbens 11 bildet wie gesagt einen Anschlag für den ersten Kolben 10 und eine Mitnehmereinrichtung 12 des zweiten Kolbens 11. Solange sich der erste Kolben 10 allein im Hauptbremszylinder 3 verschiebt, ist nur seine, kleinere Kolbenfläche wirksam, verschieben sich die beiden Kolben 10, 11 gemeinsam, ist die Gesamtkolbenfläche beider Kolben 10, 11 wirksam.

Der erste Kolben 10 und der zweite Kolben 11 wirken gemeinsam auf einen Druckraum 13 des Hauptbremszylinders 3 und damit auf einen Bremskreis II der Fahrzeugbremsanlage 1. Für den anderen Bremskreis I weist der Hauptbremszylinder 3 einen Schwimmkolben 14 auf, der in an sich bekannter Weise durch Druckbeaufschlagung vom ersten Kolben 10 (Stangenkolben) und ggf. zusätzlich vom zweiten Kolben 11 und bei einer Undichtigkeit mechanisch vom ersten und/oder zweiten Kolben 10, 11 verschoben wird. Dies ist an sich bekannt und braucht nicht näher erläutert werden.

Zu erwähnen ist noch, dass der vom ersten Kolben 10 beaufschlagte Druckraum 13 mit einem auf den Hauptbremszylinder 3 aufgesetzten Bremsflüssigkeitsvorratsbehälter 15 kommuniziert, von dem er in üblicher Weise nach einem kurzen Verschiebeweg des ersten Kolbens 10 getrennt wird. Dies erfolgt durch eine Bohrung 21 im ersten Kolben 10, die nach kurzem Verschiebeweg des ersten Kolbens 10 vom nicht verschobenen zweiten Kolben 11 überfahren und dadurch geschlossen wird. Eine andere Möglichkeit die Druckkammer 13 nach kurzem Verschiebeweg des ersten Kolbens 10 vom Bremsflüssigkeitsvorratsbehälter 15 zu trennen ist beispielsweise ein in den ersten Kolben 10 integriertes sog. Zentralventil, wie es von Hauptbremszylindern bekannt ist (nicht dargestellt).

Bei einer Betätigung des Hauptbremszylinders 3 wird das Trennventil 5 eines der beiden Bremskreise I, II geschlossen und dieser Bremskreis I, II dadurch hydraulisch vom Hauptbremszylinder 3 getrennt. Vorzugsweise wird das Trennventil 5 des Bremskreis I geschlossen, an den die Radbremsen 4 der Fahrzeugräder angeschlossen sind, die mit der elektrischen Maschine 2 antreibbar sind. Ebenfalls vorzugsweise ist der Bremskreis I, an den die Radbremsen 4 angeschlossen sind, deren Fahrzeugräder mit der elektrischen Maschine 2 antreibbar sind, an einen Druckraum 16 des Hauptbremszylinders 3 angeschlossen, der vom Schwimmkolben 14 beaufschlagt wird. Allerdings ist es auch möglich, den Bremskreis II, dessen Fahrzeugräder keine elektrische Maschine aufweisen, an den Druckraum 16 des Hauptbremszylinders 3, der vom Schwimmkolben 14 beaufschlagt wird, anzuschließen und/oder durch Schließen des Trennventils 5 hydraulisch vom Hauptbremszylinder 3 zu trennen. Der Bremskreis II, dessen Trennventil 5 bei einer Betätigung des Hauptbremszylinders 3 nicht vom Hauptbremszylinder 3 geschlossen wird, wird in herkömmlicher Weise durch den durch die Betätigung im Hauptbremszylinder 3 aufgebauten hydraulischen Druck betätigt, der die an diesen Bremskreis II angeschlossen Radbremsen 4 beaufschlagt. In dem Bremskreis I, der vom Hauptbremszylinder 3 getrennt wird, wird ein Bremsdruck mit der Hydropumpe 6 aufgebaut und es werden die Radbremsdrücke in den angeschlossenen Radbremsen 4 mit den Bremsdruckmodulationsventilanordnungen 7 oder in anderer Wiese geregelt. Die Radbremsdrücke werden entsprechend einer Bremswirkung der elektrischen Maschine 2, die während einer Bremsung als Generator betrieben wird, verringert, Schwankungen der Generatorleistung und damit der Verzögerungswirkung der elektrischen Maschine 2 im Generatorbetrieb werden ausgeregelt. Einen Sollwert für die Gesamtverzögerung des Kraftfahrzeugs durch die Radbremsen 4 und die elektrische Maschine 2 im Generatorbetrieb wird vorgegeben von einem Pedalwegsensor 17, einem Pedalkraftsensor 18 und/oder einem Drucksensor 19, der einen Hauptbremszylinderdruck in einer Druckkammer 13, 16 des Hauptbremszylinders 3 misst. Eine Bremskraft der Radbremsen 4, die an den Bremskreis I angeschlossen sind, dessen Trennventil 5 bei einer Bremsbetätigung geschlossen wird, wird nach Möglichkeit so stark gemindert, dass die Verzögerungswirkung der elektrischen Maschine 2 im Generatorbetrieb ausgeglichen wird.

Bei einer Störung (der Schlupfregelung) der Fahrzeugbremsanlage 1 bleiben die Trennventile 5 der Bremskreise I, II offen und es erfolgt eine Bremsung durch Druckbeaufschlagung aller Radbremsen 4 mit dem Hauptbremszylinder 3.

Die kleinere Kolbenfläche des ersten Kolbens 10 bewirkt bei einem bestimmten Pedalweg einen niedrigeren Druckaufbau und damit eine niedrigere Pedalkraft. Eine Pedalkennlinie, d. h. die Abhängigkeit der Pedalkraft vom Pedalweg, ist dadurch an übliche Verhältnisse eines Hauptbremszylinders angepasst, dessen Stangenkolben den Durchmesser des Hauptbremszylinders aufweist. Ein Fahrzeugführer hat zumindest näherungsweise ein gewohntes Pedalgefühl. Der vorgegebene Kolbenweg s des ersten Kolbens 10 bis zur Anlage an der Mitnehmereinrichtung 12 des zweiten Kolbens 11 ist so lang bemessen, dass er im üblichen Fahrbetrieb auch bei starken Bremsungen ausreicht, normalerweise wird also nur der erste Kolben 10 (und u. U. der Schwimmkolben 14), nicht aber der zweite Kolben 11 bewegt.

Bei einer Hilfsbremsung im Falle einer Störung, wenn beide Trennventile 5 offen bleiben und die Radbremsen 4 beider Bremskreise I, II mit dem Hauptbremszylinder 3 betätigt werden, kann es vorkommen, dass das vom ersten Kolben 10 aus dem Hauptbremszylinder 3 verdrängte Bremsflüssigkeitsvolumen nicht ausreicht. Dann stößt der erste Kolben 10 bei einer Bremsbetätigung an der Mitnehmereinrichtung 12 des zweiten Kolbens 11 an und verschiebt den zweiten Kolben 11 mit. Die dadurch größere wirksame Kolbenfläche des ersten und des zweiten Kolbens 10, 11 bewirkt eine Verdrängung von mehr Bremsflüssigkeit pro Pedalweg aus dem Hauptbremszylinder 3, die zur Bremsbetätigung ausreicht. Außerdem verkleinert die größere wirksame Kolbenfläche bei Verschiebung des ersten und des zweiten Kolbens 10, 11 den Pedalweg, der zu einer Erhöhung des Hauptbremszylinderdrucks notwendig ist.

An die Druckkammer 13 des Hauptbremszylinders 16 ist ein vorgespannter Hydrospeicher 20 angeschlossen. In der dargestellten Ausführungsform ist der Hydrospeicher 20 an den Druckraum 13 angeschlossen, der vom ersten und vom zweiten Kolben 10, 11 beaufschlagt wird. Möglich ist allerdings auch ein Anschluss des Hydrospeichers 20 an die den Druckraum 16, der vom Schwimmkolben 14 beaufschlagt wird (nicht dargestellt). Der Hydrospeicher 20 kann beispielsweise mit einer mechanischen Feder und/oder mit Gasdruck vorgespannt sein, die Aufzählung ist nicht abschließend. Die Vorspannung des Hydrospeichers 20 ist so groß, dass der Hydrospeicher 20 normalerweise keine Bremsflüssigkeit aufnimmt. Bis zu einem maximalen Auslegedruck der Fahrzeugbremsanlage 1 nimmt der Hydrospeicher 20 aufgrund seiner Vorspannung keine Bremsflüssigkeit auf. Der maximale Auslegedruck ergibt sich bei einer angenommenen maximalen auf das Bremspedal 8 ausgeübten Muskelkraft wenn die volle Kolbenfläche, also die Kolbenfläche des ersten und des zweiten Kolbens 10, 11 gemeinsam wirksam sind. Wird nur der erste Kolben 10 verschoben, würde bei der angenommenen maximalen auf das Bremspedal 8 ausgeübten Muskelkraft aufgrund des kleineren Kolbendurchmesser des ersten Kolbens 10 der Hauptbremszylinderdruck größer als der maximale Auslegedruck bei voller Kolbenfläche des ersten und des zweiten Kolbens 10, 11 werden. In diesem Fall nimmt wie ausgeführt der vorgespannte Hydrospeicher 20 aus dem Hauptbremszylinder 3 verdrängte Bremsflüssigkeit auf und verringert dadurch den Druckanstieg im Hauptbremszylinder 3, wenn der Hauptbremszylinderdruck den maximalen Auslegedruck übersteigt. Die Funktion des vorgespannten Hydrospeichers 20 ist demgemäss eine Begrenzung oder zumindest Verringerung des Anstiegs des Hauptbremszylinderdrucks, wenn dieser den maximalen Auslegedruck übersteigt. Der vorgespannte Hydrospeicher 20 hat somit die Funktion, eine Beschädigung des Hauptbremszylinders 3 und/oder anderer Teile der Fahrzeugbremsanlage 1 durch zu großen Druck zu verhindern. Normalerweise, d. h. wenn der Hauptbremszylinderdruck den maximalen Auslegedruck nicht übersteigt, nimmt der Hydrospeicher 20 aufgrund seiner Vorspannung keine Bremsflüssigkeit auf und ist außer Funktion. Aufgrund der großen Vorspannung ist eine Erhöhung der Spannung und damit des Druckanstiegs verhältnismäßig gering, wenn der Hauptbremszylinderdruck den maximalen Auslegedruck übersteigt und infolgedessen der Hydrospeicher 20 Bremsflüssigkeit aufnimmt.

## Patentansprüche

1. Hauptbremszylinder für eine hydraulische Fahrzeugbremsanlage (1) eines Kraftfahrzeugs, das eine elektrische Maschine (2) aufweist, die zum Verzögern des Kraftfahrzeugs als Generator betreibbar ist, wobei der Hauptbremszylinder (3) zwei Kolben (10, 11) für einen Bremskreis II und eine Mitnehmereinrichtung (12) aufweist, die nach Verschieben eines ersten der beiden Kolben (10) um einen vorgegebenen Kolbenweg (s) den zweiten Kolben (11) mit dem ersten Kolben (10) mitnimmt, und wobei eine zum Verdrängen von Bremsflüssigkeit aus dem Hauptbremszylinder (3) wirksame Kolbenfläche beider Kolben (10, 11) größer als eine zum Verdrängen von Bremsflüssigkeit aus dem Hauptbremszylinder (3) wirksame Kolbenfläche des ersten Kolbens (10) ist, und mit einem Hydrospeicher (20), der mit dem Hauptbremszylinder (3) kommuniziert, **dadurch gekennzeichnet, dass** der Hydrospeicher (20) eine Vorspannung aufweist, so dass er erst Bremsflüssigkeit aus dem Hauptbremszylinder (3) aufnimmt, wenn ein Hauptbremszylinderdruck größer als ein maximaler Auslegedruck der Fahrzeugbremsanlage (1) ist.

2. Hauptbremszylinder nach Anspruch 1, **dadurch gekennzeichnet, dass** der erste Kolben (10) im zweiten Kolben (11) einliegt.

3. Hauptbremszylinder nach Anspruch 1, **dadurch gekennzeichnet, dass** bei nicht betätigtem Hauptbremszylinder (3) ein Druckraum (13) des Hauptbremszylinders (3) mit einem Bremsflüssigkeitsvorratsbehälter (15) kommuniziert und dass durch eine kurze Verschiebung des ersten Kolbens (10) der Druckraum (13) vom Bremsflüssigkeitsvorratsbehälter (15) getrennt wird.

4. Hauptbremszylinder nach Anspruch 1, **dadurch gekennzeichnet, dass** der Hauptbremszylinder (3) ein Tandem- oder Mehrkreis-Hauptbremszylinder (3) für eine Zweikreis-Fahrzeugbremsanlage (1) ist.

5. Verfahren zum Betrieb einer hydraulischen Fahrzeugbremsanlage (1) eines Kraftfahrzeugs, die einen Hauptbremszylinder (3) mit zwei Kolben (10, 11) für einen Bremskreis II der Fahrzeugbremsanlage (1) und eine Mitnehmereinrichtung (12) aufweist, die nach Verschieben eines ersten der beiden Kolben (10) um einen vorgegebenen Kolbenweg (s) den zweiten Kolben (11) mit dem ersten Kolben (10) mitbewegt, wobei eine zum Verdrängen von Bremsflüssigkeit aus dem Hauptbremszylinder (3) wirksame Kolbenfläche beider Kolben (10, 11) größer als eine zum Verdrängen von Bremsflüssigkeit aus dem Hauptbremszylinder (3) wirksame Kolbenfläche des ersten Kolbens (10) ist und wobei der Bremskreis II der Fahrzeugbremsanlage (1) über ein Trennventil (5) an die beiden Kolben (10, 11) des Hauptbremszylinders (3) angeschlossen ist, das bei einer Betriebsbremsung geschlossen wird, **dadurch gekennzeichnet, dass** das Kraftfahrzeug eine elektrische Maschine (2) aufweist, die bei der Betriebsbremsung als Generator betrieben wird und das Kraftfahrzeug verzögert, dass die Fahrzeugbremsanlage (1) eine Hydropumpe (6) aufweist, mit der bei der Betriebsbremsung ein Bremsdruck erzeugt wird, und dass ein Radbremsdruck in mindestens einer Radbremse (4) der Fahrzeugbremsanlage (1) in Abhängigkeit von einer Betätigung des Hauptbremszylinders (3) und von einer Verzögerungswirkung der als Generator betriebenen elektrischen Maschine (2) geregelt wird.

6. Verfahren nach Anspruch 5, **dadurch gekennzeichnet, dass** die Fahrzeugbremsanlage (1) mindestens ein Radbremsdruckregelventil (7) zur Regelung des Radbremsdrucks in mindestens einer Radbremse (4) der Fahrzeugbremsanlage (1) aufweist.

7. Verfahren nach Anspruch 5, **dadurch gekennzeichnet, dass** der Hauptbremszylinder (3) ein Tandem- oder Mehrkreis-Hauptbremszylinder (3) ist und dass die Fahrzeugbremsanlage (1) mindestens einen weiteren Bremskreis II aufweist, der bei der Betriebsbremsung mit dem Hauptbremszylinder (3) verbunden bleibt.

## Claims

1. Master brake cylinder for a hydraulic vehicle brake system (1) of a motor vehicle comprising an electric machine (2) which can be operated as a generator for decelerating the motor vehicle, wherein the master brake cylinder (3) has two pistons (10, 11) for a brake circuit II and a carrier device (12) which, after movement of a first of the two pistons (10) by a prespecified piston travel (s), carries the second piston (11) with the first piston (10), and wherein a piston area of both pistons (10, 11) active for displacement of brake fluid from the master brake cylinder (3) is greater than a piston surface of the first piston (10) active for displacement of brake fluid from the master brake cylinder (3), and with a hydro-accumulator (20) which communicates with the master brake cylinder (3), **characterized in that** the hydro-accumulator (20) has a pretension such that it only receives brake fluid from the master brake cylinder (3) when a master brake cylinder pressure is greater than a maximum design pressure of the vehicle brake system (1).

2. Master brake cylinder according to Claim 1, **characterized in that** the first piston (10) lies within the second piston (11).

3. Master brake cylinder according to Claim 1, **characterized in that** when the master brake cylinder (3) is not activated, a pressure chamber (13) of the master brake cylinder (3) communicates with a brake fluid storage reservoir (15) and **in that** by a short movement of the first piston (10), the pressure chamber (13) is isolated from the brake fluid storage reservoir (15).

4. Master brake cylinder according to Claim 1, **characterized in that** the master brake cylinder (3) is a tandem or multicircuit master brake cylinder (3) for a dual-circuit vehicle brake system (1).

5. Method for operation of a hydraulic vehicle brake system (1) of a motor vehicle which comprises a master brake cylinder (3) with two pistons (10, 11) for a brake circuit II of the vehicle brake system (1) and a carrier device (12) which after movement of a first of the two pistons (10) over a pre-specified piston travel (s) carries the second piston (11) with the first piston (10), wherein a piston surface area of both pistons (10, 11) active for displacement of brake fluid from the master brake cylinder (3) is greater than a piston surface of the first piston (10) active for displacement of brake fluid from the master brake cylinder (3), wherein the brake circuit II of the vehicle brake system (1) is connected via an isolating valve (5) to the two pistons (10, 11) of the master brake cylinder (3), which valve is closed in service braking, and with a hydro-accumulator (20) which communicates with the master brake cylinder (3), **characterized in that** the hydro-accumulator (20) has a pretension such that it only receives brake fluid from the master brake cylinder (3) when a master brake cylinder pressure is greater than a maximum design pressure of the vehicle brake system (1), and **in that** the motor vehicle comprises an electric machine (2) which in service braking is operated as a generator and decelerates the motor vehicle, that the vehicle brake system (1) comprises a hydraulic pump (6) with which in service braking a brake pressure is generated and that a wheel brake pressure in at least one wheel brake (4) of the vehicle brake system (1) is regulated depending on activation of the master brake cylinder (3) and on a deceleration effect of the electric machine (2) operated as a generator.

6. Method according to Claim 5, **characterized in that** the vehicle brake system (1) comprises at least one wheel brake pressure control valve (7) to regulate the wheel brake pressure in at least one wheel brake (4) of the vehicle brake system (1).

7. Method according to Claim 5, **characterized in that** the master brake cylinder (3) is a tandem or multicircuit master brake cylinder (3) and that the vehicle brake system (1) comprises at least one further brake circuit II which in service braking remains connected with the master brake cylinder (3).

## Revendications

1. Maître-cylindre de frein pour un système de freinage hydraulique de véhicule (1) pour un véhicule automobile qui présente un moteur électrique (2) qui peut fonctionner en tant que générateur pour le ralentissement du véhicule automobile, le maître-cylindre de frein (3) présentant deux pistons (10, 11) pour un circuit de freinage II et un dispositif d'entraînement (12) qui, après le déplacement d'un premier des deux pistons (10) sur une course de piston prédéfinie (s), entraîne le deuxième piston (11) avec le premier piston (10), et la surface de piston des deux pistons (10, 11) active pour refouler du liquide de frein hors du maître-cylindre de frein (3) étant supérieure à une surface de piston du premier piston (10) active pour refouler du liquide de frein hors du maître-cylindre de frein (3), et comprenant un accumulateur hydraulique (20) qui communique avec le maître-cylindre de frein (3), **caractérisé en ce que** l'accumulateur hydraulique (20) présente une précontrainte de telle sorte qu'il reçoive du liquide de frein depuis le maître-cylindre de frein (3) seulement une fois qu'une pression de maître-cylindre de frein a dépassé une pression maximale de conception du système de freinage hydraulique de véhicule (1).

2. Maître-cylindre de frein selon la revendication 1, **caractérisé en ce que** le premier piston (10) est introduit dans le deuxième piston (11).

3. Maître-cylindre de frein selon la revendication 1, **caractérisé en ce que** lorsque le maître-cylindre de frein (3) n'est pas activé, un espace de pression (13) du maître-cylindre de frein (3) communique avec un réservoir de liquide de frein (15) et **en ce que** par un court déplacement du premier piston (10), l'espace de pression (13) est séparé du réservoir de liquide de frein (15).

4. Maître-cylindre de frein selon la revendication 1, **caractérisé en ce que** le maître-cylindre de frein (3) est un maître-cylindre de frein (3) en tandem ou à plusieurs circuits pour un système de freinage de véhicule à deux circuits (1).

5. Procédé pour faire fonctionner un système de freinage hydraulique de véhicule (1) d'un véhicule automobile, qui présente un maître-cylindre de frein (3) avec deux pistons (10, 11) pour un circuit de freinage II du système de freinage de véhicule (1) et un dispositif d'entraînement (12) qui, après le déplacement d'un premier des deux pistons (10) sur une course de piston prédéfinie (s), entraîne le deuxième piston (11) avec le premier piston (10), une surface de piston des deux pistons (10, 11) active pour refouler du liquide de frein hors du maître-cylindre de frein (3) étant supérieure à une surface de piston du premier piston (10) active pour refouler du liquide de frein hors du maître-cylindre de frein (3), le circuit de freinage II du système de freinage de véhicule (1) étant raccordé par le biais d'une soupape de séparation (5) aux deux pistons (10, 11) du maître-cylindre de frein (3) qui est fermé lors d'un freinage de service et comprenant un accumulateur hydraulique (20) qui communique avec un maître-cylindre de frein (3), **caractérisé en ce que** l'accumulateur hydraulique (20) présente une précontrainte de telle sorte qu'il reçoive du liquide de frein depuis le maître-cylindre de frein (3) seulement une fois qu'une pression de maître-cylindre de frein a dépassé une pression maximale de conception du système de freinage de véhicule (1) et **en ce que** le véhicule automobile présente une machine électrique (2) qui fonctionne lors du freinage de service en tant que générateur et qui ralentit le véhicule automobile, **en ce que** le système de freinage de véhicule (1) présente une pompe hydraulique (6) avec laquelle, lors du freinage de service, une pression de freinage est générée, et **en ce qu'**une pression de frein de roue est régulée dans au moins un frein de roue (4) du système de freinage de véhicule (1) en fonction d'un actionnement du maître-cylindre de frein (3) et d'un effet de ralentissement de la machine électrique (2) fonctionnant en tant que générateur.

6. Procédé selon la revendication 5, **caractérisé en ce que** le système de freinage de véhicule (1) présente au moins une soupape de régulation de la pression de frein de roue (7) pour réguler la pression de frein de roue dans au moins un frein de roue (4) du système de freinage de véhicule (1).

7. Procédé selon la revendication 5, **caractérisé en ce que** le maître-cylindre de frein (3) est un maître-cylindre de frein (3) en tandem ou à plusieurs circuits et **en ce que** le système de freinage de véhicule (1) présente au moins un circuit de freinage supplémentaire II, qui reste connecté au maître-cylindre de frein (3) lors du freinage de service.
